# EUROPEAN PATENT APPLICATION

(11) **EP 4 717 412 A1**
(43) Date of publication of application: **01.04.2026**
(21) Application number: 25198227.8
(22) Date of filing: 26.08.2025
(51) Int. Cl.: B25J 9/10, B25J 17/02, B25J 19/00

(54) **COLLABORATIVE ROBOT**

(30) Priority: 30.09.2024 JP 2024170157
(71) Applicant: DAIHEN Corporation, Yodogawa-ku Osaka-shi, Osaka 532-8512 (JP)
(72) Inventor: MATSUO, Hideki, Osaka-shi, 532-8512 (JP)
(74) Representative: D Young & Co LLP

(57) **Abstract**

In a state where an output shaft of a fifth axis motor that allows a support arm of a collaborative robot to rotate about the fifth axis is disposed along a fourth axis, the fifth axis motor and a torque converter that converts a torque of the output shaft into a torque about the fifth axis are housed inside of an upper arm. The upper arm is a cylindrical case, and includes an arm body having an opening for attaching the fifth axis motor and the torque converter, and a cover attached to the arm body to cover the opening. The fifth axis motor and the torque converter are housed in an internal region within an opening edge of the opening when viewed along the fifth axis.

## Description

### BACKGROUND

### Technical Field

The present invention relates to a collaborative robot.

### Background Art

This type of technique includes an articulated robot which includes an upper arm connected to a lower arm, and a support arm pivotally attached to the end of the upper arm as disclosed, for example, in JP 2021-000724 A. In this type of robot, a motor (fifth axis motor) that allows the support arm to rotate is usually housed in the upper arm in many cases. Here, when an output shaft of the fifth axis motor is disposed along a fourth axis that is an axial center of the upper arm, it is possible to achieve downsizing of the upper arm as compared to the case where the output shaft of the fifth axis motor is disposed along the fifth axis.

### SUMMARY

However, when the articulated robot described in JP 2021-000724 A is a collaborative robot and the output shaft of the fifth axis motor is disposed along the fourth axis, the output shaft will be connected to a torque converter that converts the torque of the output shaft of the fifth axis motor into the torque about the fifth axis. This may complicate attachment and detachment of the fifth axis motor and the torque converter.

The present invention has been made in view of the foregoing, and provides a collaborative robot that allows the fifth axis motor and the torque converter to be simply attached to and detached from the upper arm.

In view of the above-described problem, the collaborative robot according to the present invention includes: a turning base that is pivotally attached to a base so as to be rotatable about a first axis; a lower arm that is pivotally attached to the turning base so as to be rotatable about a second axis; a shoulder that is pivotally attached to the lower arm so as to be rotatable about a third axis that is parallel to the second axis; an upper arm that is pivotally attached to the shoulder so as to be rotatable about a fourth axis along a longitudinal direction; a support arm that is pivotally attached so as to be rotatable about a fifth axis perpendicular to the fourth axis at a distal end portion of the upper arm; and a distal end member that is rotatable about a sixth axis along the longitudinal direction with respect to the support arm. In a state where an output shaft of the fifth axis motor that allows the support arm to rotate about the fifth axis is disposed along the fourth axis, the fifth axis motor and a torque converter that converts a torque of the output shaft into a torque about the fifth axis are housed inside of the upper arm. The upper arm is a cylindrical case, and includes an arm body having an opening for attaching the fifth axis motor and the torque converter, and a cover to be attached to the arm body to cover the opening. The fifth axis motor and the torque converter are housed in an internal region within an opening edge of the opening when viewed in a direction along the fifth axis.

According to the present invention, the fifth axis motor and the torque converter are housed in the internal region within the opening edge of the opening when viewed in a direction along the fifth axis. Accordingly, the fifth axis motor and the torque converter can be simply attached to and detached from the upper arm along the fifth axis through the opening of the upper arm.

In a preferred aspect, the fifth axis motor and the torque converter each have a protruding portion that protrudes from the opening edge of the opening.

According to this aspect, by holding the protruding portion or a portion around it, it is possible to more easily take out the fifth axis motor and the torque converter from the opening.

In another preferred aspect, the fifth axis motor includes a motor body. When viewed in a direction along the fifth axis, a gap is formed between a pair of side surfaces of the motor body along a direction of the fourth axis and opposing edge portions of the opening edge that respectively face the side surfaces. The gap is formed to widen from an end portion of the side surfaces located nearer to the shoulder toward the torque converter along the fourth axis.

According to this aspect, the opposing edge portions among other portions of the opening edge expand outward of the opening edge. This allows an operator to put his or her hands in the gap between the side surfaces of the fifth axis motor and the opposing edge portions and easily take out the fifth axis motor from the opening.

In a further preferred aspect, the torque converter is fixed to the arm body, and the fifth axis motor is fixed in a suspended state to the torque converter via a bracket that houses the output shaft of the fifth axis motor.

According to this aspect, in addition to the above-described gap, another gap is formed below the fifth axis motor. This allows the operator to more easily take out the fifth axis motor, together with the bracket, from the opening. In addition, with these gaps, heat dissipation properties associated with the rotation of the fifth axis motor are improved.

In still another preferred aspect, the protruding portion of the torque converter is mounted to the bracket by a fixing member, and an insertion hole into which the fixing member is to be inserted is formed in the protruding portion of the torque converter and the bracket in a direction along the fourth axis.

According to this aspect, while the collaborative robot is operating, the fifth axis motor and the torque converter can be integrally fixed by the fixing member. In addition, during maintenance of the fifth axis motor and the torque converter, after the fixing member is removed from the protruding portion of the torque converter in the direction along the fourth axis, the fifth axis motor can be easily taken out from the opening. After that, the torque converter can also be easily taken out from the opening.

In yet another preferred aspect, in a cross section orthogonal to the fourth axis, a thickness of the opening edge of the opening is larger than a thickness of another portion of the opening.

According to this aspect, the upper arm (the arm body) including the opening edge can have a sufficient flexural strength when the cover is removed.

In yet another preferred aspect, the shoulder houses therein a fourth axis motor that allows the upper arm to rotate about the fourth axis, and an area inside of the upper arm nearer to the shoulder than the fifth axis motor includes a hollow portion that houses a wire connected to the fifth axis motor.

According to this aspect, the wire housed in the hollow portion will not interfere with the fourth axis motor since the fourth axis motor is not disposed in the hollow portion. Accordingly, the wire with an excess length can be housed in the hollow portion, the fifth axis motor can be taken out from the opening, and the housed wire with an excess length can be smoothly taken out from the opening.

According to the present invention, the fifth axis motor and the torque converter can be simply attached to and detached from the upper arm.

### BRIEF DESCRIPTION OF THE DRAWINGS

FIG. 1 is a perspective view of a collaborative robot according to the present embodiment;
FIG. 2 is a view of an upper arm of the collaborative robot according to the present embodiment, when viewed in a direction along a fifth axis, where a cover is removed;
FIG. 3A is a view of the collaborative robot illustrated in FIG. 2, as viewed in a plane including a fourth axis and a fifth axis;
FIG. 3B is a cross-sectional view of a portion of the internal configuration of the collaborative robot illustrated in FIG. 3A.
FIG. 4A and FIG. 4B are perspective views for describing a method of detaching a fifth axis motor from an arm body of the collaborative robot according to the present embodiment; and
FIG. 5A and FIG. 5B are cross-sectional views showing cross sections orthogonal to the fourth axis of the arm body of the collaborative robot according to the present embodiment, the cross-sectional view of FIG. 5A including an opening edge of an opening, and the cross-sectional view of FIG. 5B not including the opening edge of the opening.

### DETAILED DESCRIPTION

### [Embodiment]

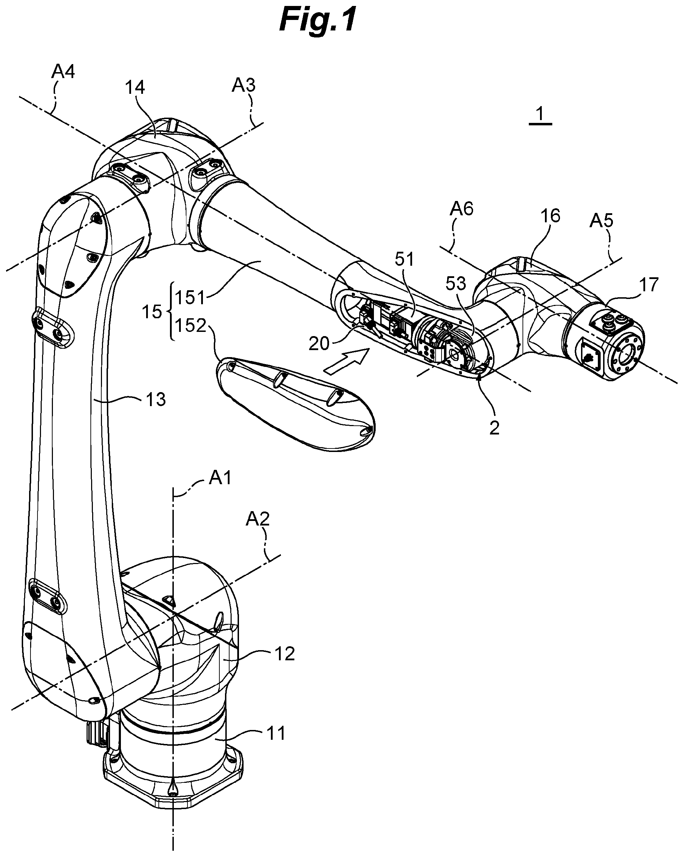

Hereinafter, an embodiment of the present invention will be described in detail with reference to the drawings from FIG. 1 to FIG. 5B. It is noted that the following embodiment describes one embodiment of the present invention and therefore should not be considered as limiting the technical scope of the present invention.

### <Apparatus configuration>

FIG. 1 is a perspective view of a collaborative robot 1 according to the present embodiment. As illustrated in FIG. 1, the collaborative robot 1 is an articulated robot used with an end effector or the like (not illustrated) of a welding apparatus (torch) attached to a distal end member 17 of the collaborative robot 1.

The collaborative robot 1 includes a base 11 placed on a surface for installation such as a floor surface or the like, and a turning base 12 pivotally attached to the base 11 so as to be rotatable about a first axis A1 along a direction perpendicular to the surface for installation. An output shaft of a first axis motor (not illustrated) that is fixed to the base 11 is connected to the turning base 12. Accordingly, the turning base 12 driven by the first axis motor can be rotated about the first axis A1. A first speed reducer (not illustrated) is attached to the output shaft of the first axis motor. It is noted that the first axis motor and the first speed reducer are housed inside of the base 11 and the turning base 12.

In addition, the collaborative robot 1 includes a lower arm 13 that is pivotally attached to the turning base 12 so as to be rotatable about a second axis A2, and a shoulder 14 that is pivotally attached to the lower arm 13 so as to be rotatable about a third axis A3 that is parallel to the second axis A2. A proximal end of the lower arm 13 is pivotally attached to the turning base 12 so as to be rotatable about the second axis A2 via a second axis motor (not illustrated). Here, although the second axis A2 is an axis perpendicular to the first axis A1, one of these two orthogonal axes may be offset and these axes may have a twisted positional relationship with respect to each other. By the power of the second axis motor, the lower arm 13 rotates about the second axis A2 with respect to the turning base 12. The second axis motor is housed inside of the turning base 12. A second speed reducer (not illustrated) is attached to an output shaft of the second axis motor. The lower arm 13 is a cylindrical case and includes various cables (not illustrated) inserted therethrough.

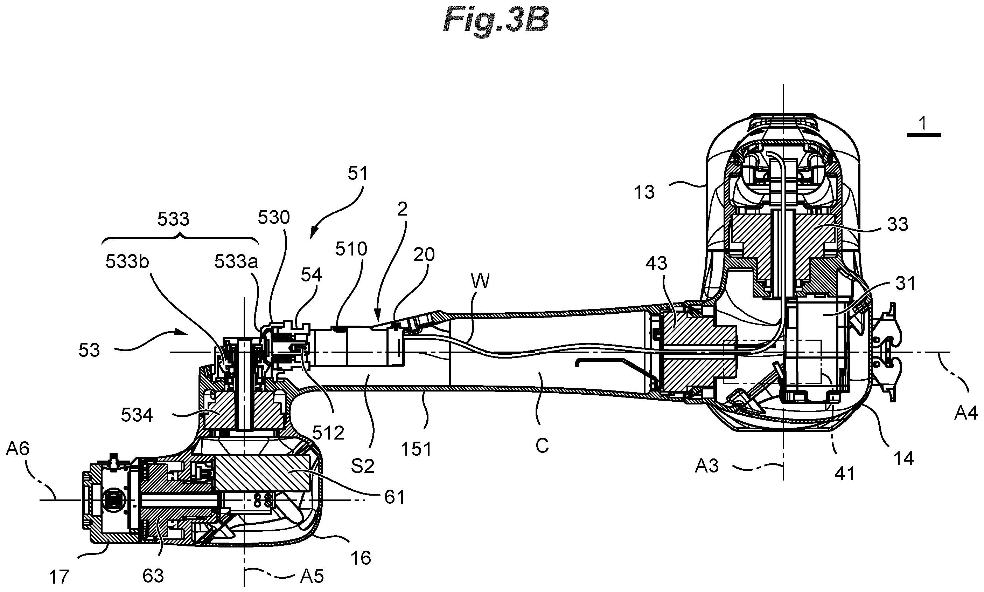

A portion of the shoulder 14 is pivotally attached to the lower arm 13 so as to be rotatable about the third axis A3 via a third axis motor 31 (illustrated in FIG. 3B). By the power of the third axis motor 31, the shoulder 14 rotates about the third axis A3 with respect to the lower arm 13. The third axis motor 31 is housed inside of the shoulder 14. A third speed reducer 33 (illustrated in FIG. 3B) is attached to an output shaft of the third axis motor 31.

In addition, the collaborative robot 1 includes an upper arm 15 that is pivotally attached to the shoulder 14 so as to be rotatable about a fourth axis A4 along the longitudinal direction, a support arm 16 that is pivotally attached so as to be rotatable about a fifth axis A5 perpendicular to the fourth axis A4 at a distal end portion of the upper arm 15, and the distal end member 17 that is rotatable about a sixth axis A6 along the longitudinal direction with respect to the support arm 16. Here, the lower arm 13, the upper arm 15, and the support arm 16 are made of metal, for example, a casting of cast iron or an aluminum alloy casting.

The proximal end of the upper arm 15 is pivotally attached to the shoulder 14 so as to be rotatable about the fourth axis A4 via a fourth axis motor 41 (illustrated in FIG. 3B). Here, although the fourth axis A4 is an axis perpendicular to the third axis A3, one of these two orthogonal axes may be offset and these axes may have a twisted positional relationship with respect to each other. By the power of the fourth axis motor 41, the upper arm 15 rotates about the fourth axis A4 with respect to the shoulder 14. The fourth axis motor 41 is housed inside of the shoulder 14. A fourth speed reducer 43 (illustrated in FIG. 3B) is attached to an output shaft of the fourth axis motor 41.

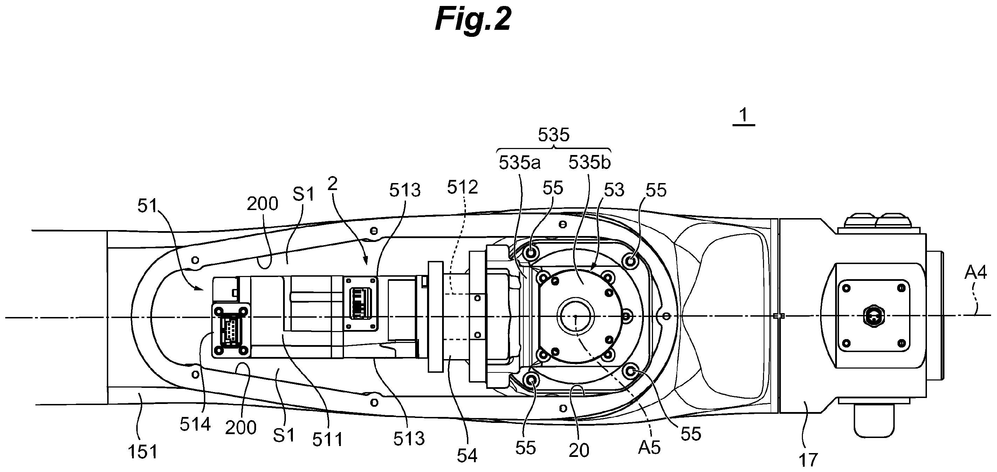

A portion of the support arm 16 is pivotally attached to the upper arm 15 so as to be rotatable about the fifth axis A5 via a fifth axis motor 51. Here, although the fifth axis A5 is an axis perpendicular to the fourth axis A4, one of these two orthogonal axes may be offset and these axes may have a twisted positional relationship with respect to each other. By the power of the fifth axis motor 51, the support arm 16 rotates about the fifth axis A5 with respect to the upper arm 15. The fifth axis motor 51 is housed inside of the shoulder 14. A torque converter 53 is attached to an output shaft (an output shaft 512 illustrated in FIG. 2) of the fifth axis motor 51.

The distal end member 17 to which an end effector can be attached is pivotally attached to the support arm 16 so as to be rotatable about the sixth axis A6 via a sixth axis motor 61 (illustrated in FIG. 3B). Here, although the sixth axis A6 is an axis perpendicular to the fifth axis A5, one of these two orthogonal axes may be offset and these axes may have a twisted positional relationship with respect to each other. By the power of the sixth axis motor 61, the distal end member 17 rotates about the sixth axis A6 with respect to the support arm 16. The sixth axis motor 61 is housed inside of the support arm 16. A sixth speed reducer 63 (illustrated in FIG. 3B) is attached to an output shaft of the sixth axis motor 61.

As described above, in the present embodiment, the collaborative robot 1 includes the first axis motor to the sixth axis motor 61 for the driving around the axis for the first axis A1 to the sixth axis A6, respectively.

In addition, the fifth axis motor 51 has a higher operating rate as compared to the other motors for the driving around the axis. Therefore, the fifth axis motor 51 relatively tends to be deteriorated over time, and thus periodic replacement or repair of the fifth axis motor 51 is required. In the following, the configuration of the collaborative robot 1 that facilitates replacement or the like of the fifth axis motor 51, and the torque converter 53 contributing to conversion of the torque of the fifth axis motor 51 will be described.

The upper arm 15 is a cylindrical case, and includes an arm body 151 having an opening 2 for attaching the fifth axis motor 51 and the torque converter 53, and a cover 152 to be attached to the arm body 151 to cover the opening 2. The cover 152 is removably attached to the arm body 151, and when the cover 152 is removed, the fifth axis motor 51 and the torque converter 53 (more specifically, a gear case 535 illustrated in FIG. 2) can be visually recognized through the opening 2.

The opening 2 is formed in the upper arm 15 to extend from near the shoulder 14 and to, in an extending direction, deviate from the intersection between the fourth axis A4 and the fifth axis A5 toward the support arm 16. In addition, as illustrated in FIG. 2, when the upper arm 15 of the collaborative robot 1 according to the present embodiment, with the cover 152 removed, is viewed in a direction along the fifth axis A5, the opening 2 has a substantially oval shape in accordance with the arrangement of the fifth axis motor 51 and the torque converter 53 (more specifically, the gear case 535).

The fifth axis motor 51 and the torque converter 53 are housed in the internal region within an opening edge 20 of the opening 2 when viewed in the direction along the fifth axis A5 illustrated in FIG. 2. The fifth axis motor 51 and the torque converter 53 are connected to each other by a bracket 54. It is noted that in the present embodiment, the opening edge 20 refers to the edge of the inside perimeter forming the opening 2.

With the above-described configuration, the fifth axis motor 51 and the torque converter 53 can be simply attached to and detached from the upper arm 15 along the fifth axis A5 through the opening 2 of the upper arm 15.

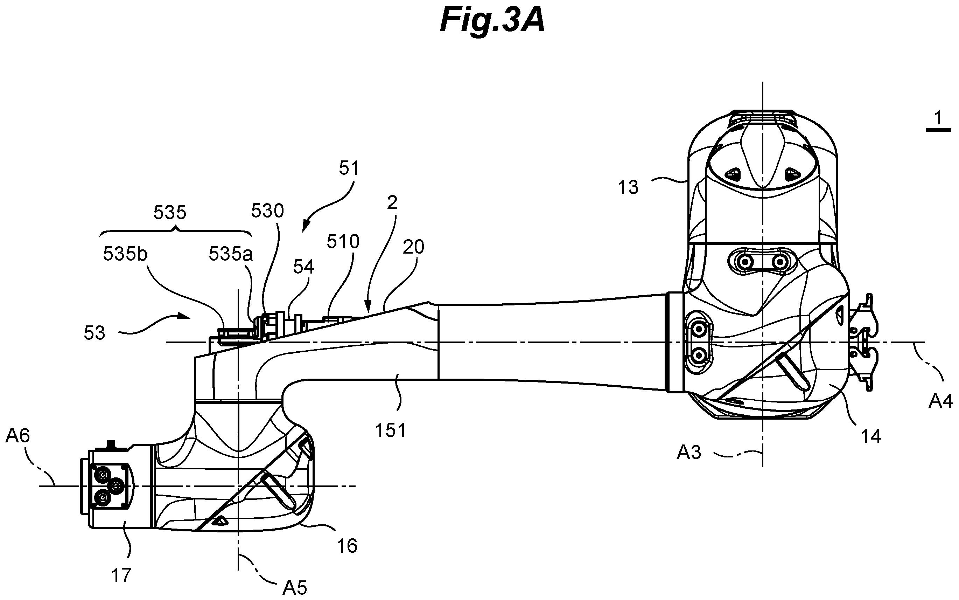

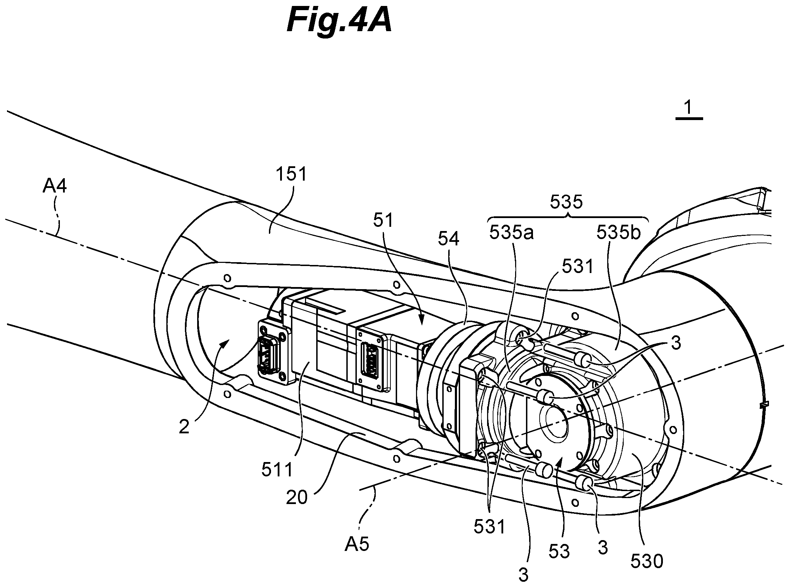

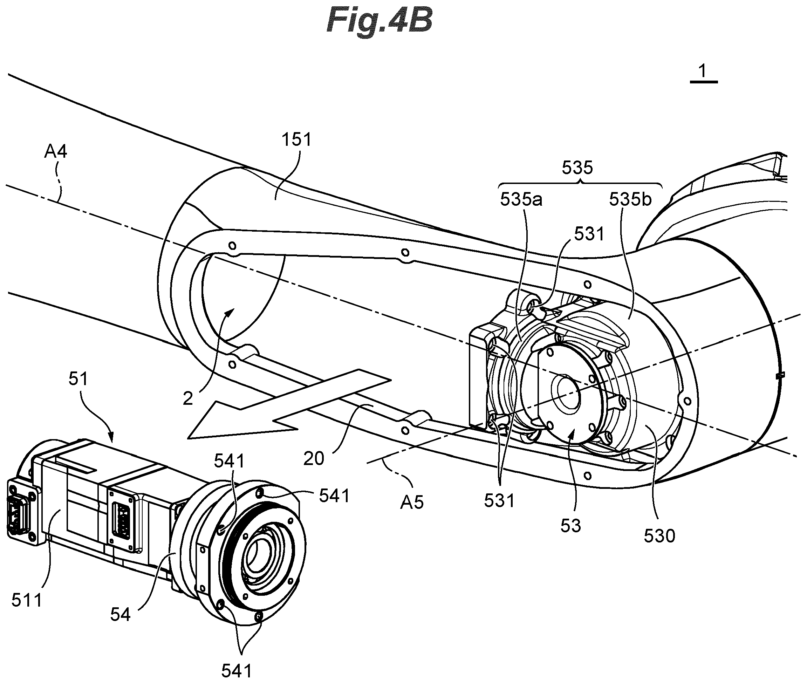

Hereinafter, referring to FIG. 2 to FIG. 4B, the configuration for simple attachment and detachment of the fifth axis motor 51 and the torque converter 53 will be described in more detail. FIG. 3A is a view of the collaborative robot 1 illustrated in FIG. 2, as viewed in a plane including the fourth axis A4 and the fifth axis A5. FIG. 3B is a cross-sectional view of a portion of the internal configuration of the collaborative robot 1 illustrated in FIG. 3A. FIG. 4A and FIG. 4B are perspective views for describing a method of detaching the fifth axis motor 51 from the arm body 151 of the collaborative robot 1 according to the present embodiment. In FIG. 3B, the portion of the internal configuration of the collaborative robot 1 is illustrated in a simplified manner. In addition, although FIG. 1 illustrates a connector on the wire side of the fifth axis motor 51, illustration of the connector is omitted in FIG. 2 and the following figures, although the connector is actually connected to the fifth axis motor 51.

In a state where the output shaft 512 of the fifth axis motor 51 that allows the support arm 16 to rotate about the fifth axis A5 is disposed along the fourth axis A4, the fifth axis motor 51 and the torque converter 53 that converts the torque of the output shaft 512 into the torque about the fifth axis A5 are housed inside of the upper arm 15. It is noted that since the output shaft 512 is housed in the bracket 54, the output shaft 512 cannot be visually confirmed even when the cover 152 is removed as illustrated in FIG. 2.

The torque converter 53 includes a pair of bevel gears 533 that adjusts the direction of the rotation of the fifth axis motor 51, a fifth speed reducer 534 that adjusts the rotational speed of the fifth axis motor 51, and the gear case 535 that houses the pair of bevel gears 533 therein and includes a plurality of insertion holes 531 (illustrated in FIG. 4B).

The pair of bevel gears 533 is made up of a first bevel gear 533a and a second bevel gear 533b that are engaged with each other at an angle of substantially 90 degrees. The direction of the rotation of the first bevel gear 533a matches the direction of the rotation of the output shaft 512 since the first bevel gear 533a is coupled to one end of the output shaft 512. The second bevel gear 533b transmits the torque of the rotation of the first bevel gear 533a to the fifth speed reducer 534 since the second bevel gear 533b is coupled to one end of the inner shaft of the fifth speed reducer 534.

The gear case 535 includes a first housing portion 535a and a second housing portion 535b that are integrally formed. The first housing portion 535a has the first bevel gear 533a housed therein and is fixed so as to contact one end of the bracket 54 having a substantially cylindrical shape. The second housing portion 535b has the second bevel gear 533b housed therein.

As already described, when viewed in the direction along the fifth axis A5 illustrated in FIG. 2, the fifth axis motor 51 and the torque converter 53 are housed in the internal region within the opening edge 20, and further, the bracket 54 that couples together a motor body 511 of the fifth axis motor 51 and the first housing portion 535a is also housed in the internal region within the opening edge 20. In addition, when viewed in the direction along the fifth axis A5 as described above, a gap S1 is formed between a pair of side surfaces 513 of the motor body 511 along the direction of the fourth axis A4 and opposing edge portions 200 of the opening edge 20 that respectively face the side surfaces 513. This gap S1 is formed to widen from an end portion 514 of the side surfaces 513 located nearer to the shoulder 14 toward the torque converter 53 along the fourth axis A4.

That is, the opposing edge portions 200 among other portions of the opening edge 20 expand when viewed in the direction along the fifth axis A5 as described above. This configuration allows an operator to put his or her hands in the gap S1 between the opposing edge portions 200 and the fifth axis motor 51 and easily take out the fifth axis motor 51 together with the bracket 54 from the opening 2.

In addition, the fifth axis motor 51 and the torque converter 53 include protruding portions 510, 530, respectively, that protrude from the opening edge 20 as illustrated in FIG. 3A. This allows the operator to hold the protruding portions 510, 530 or a portion around them, and more easily take out the fifth axis motor 51 and the torque converter 53 from the opening 2.

Furthermore, as illustrated in FIG. 2, four attachment holes 55 are formed around the fifth axis A5 in the internal region within the opening edge 20. The second housing portion 535b is fixed to the internal region within the opening edge 20 by screws (not illustrated) threaded into these attachment holes 55. By removing the screws from these attachment holes 55, the gear case 535, and the second bevel gear 533b housed in the second housing portion 535b can be taken out from the opening 2.

In addition, as illustrated in FIG. 3B, the torque converter 53 is fixed to the arm body 151, and the fifth axis motor 51 is fixed in a suspended state to the torque converter 53 (more specifically, the first housing portion 535a of the gear case 535) via the bracket 54 that houses the output shaft 512 of the fifth axis motor 51. Accordingly, a gap S2 is formed below the motor body 511 inside of the arm body 151 as viewed in the plane formed by the third axis A3 and the fourth axis A4 illustrated in FIG. 3B. The operator can also easily take out the fifth axis motor 51 together with the bracket 54 from the opening 2 by placing his or her hands into this gap S2. In addition, since a space defined by the gap S1 illustrated in FIG. 2 and the gap S2 illustrated in FIG. 3B is formed around the fifth axis motor 51, heat dissipation properties associated with the rotation of the fifth axis motor 51 are improved.

It is noted that the sixth axis motor 61 is disposed below the fifth speed reducer 534 of the torque converter 53 inside of the support arm 16 as viewed in the plane formed by the third axis A3 and the fourth axis A4 illustrated in FIG. 3B. The distal end member 17 rotates about the sixth axis A6 with respect to the support arm 16 by means of the sixth axis motor 61. An output shaft of the sixth axis motor 61 extends toward the distal end member 17, and the sixth speed reducer 63 is attached to the output shaft.

In addition, as already described, the first housing portion 535a having the first bevel gear 533a housed therein is fixed to the bracket 54. Specifically, as illustrated in FIG. 4A, only the protruding portion 530 of the torque converter 53 (more specifically, the first housing portion 535a) is mounted to the bracket 54 by a fixing member 3. Multiple (for example, four for each) insertion holes 531, 541, into each of which the fixing member 3 is to be inserted, are respectively formed in this protruding portion 530 and the bracket 54 in the direction along the fourth axis A4. It is noted that although FIG. 4A illustrates only the insertion holes 531 among the insertion holes 531 of the protruding portion 530 and the insertion holes 541 of the bracket 54, in practice, the first housing portion 535a is fixed to the bracket 54 by the fixing members 3 inserted into these insertion holes 531, 541 while being stacked together.

With the above-described configuration, while the collaborative robot 1 is operating, the fifth axis motor 51 and the torque converter 53 can be integrally fixed by the fixing members 3. In addition, since the motor body 511 of the fifth axis motor 51 is secured to the bracket 54 by the screws, the fifth axis motor 51, together with the bracket 54, can be easily taken out from the opening 2 as illustrated in FIG. 4B, by removing the fixing members 3 from the insertion holes 531, 541 using a tool such as a screwdriver. After that, the torque converter 53 can also be easily taken out from the opening 2 by pulling it along the fifth axis A5. Here, in one example, the fixing member 3 is a screw, and the insertion holes 541, 531 are screw holes.

Referring back to the description of FIG. 3B, the shoulder 14 houses therein the fourth axis motor 41 that allows the upper arm 15 to rotate about the fourth axis A4, and an area inside of the upper arm 15 nearer to the shoulder 14 than the fifth axis motor 51 includes a hollow portion C that houses a wire W connected to the fifth axis motor 51. The wire W passes through the hollow portion C from the fifth axis motor 51 and then is inserted through the shaft of the fourth speed reducer 43 of the fourth axis motor 41 and the shaft of the third speed reducer 33 of the third axis motor 31. It is noted that the third speed reducer 33 and the fourth speed reducer 43 are disposed with their shafts in the longitudinal direction being located at an angle of substantially 90 degrees.

With the above-described configuration, the wire W housed in the hollow portion C will not interfere with the fourth axis motor 41 since the fourth axis motor 41 is not disposed in the hollow portion C. Accordingly, the wire W with an excess length can be housed in the hollow portion C, the fifth axis motor 51 can be taken out from the opening 2, and the housed wire W with an excess length can be smoothly taken out from the opening 2.

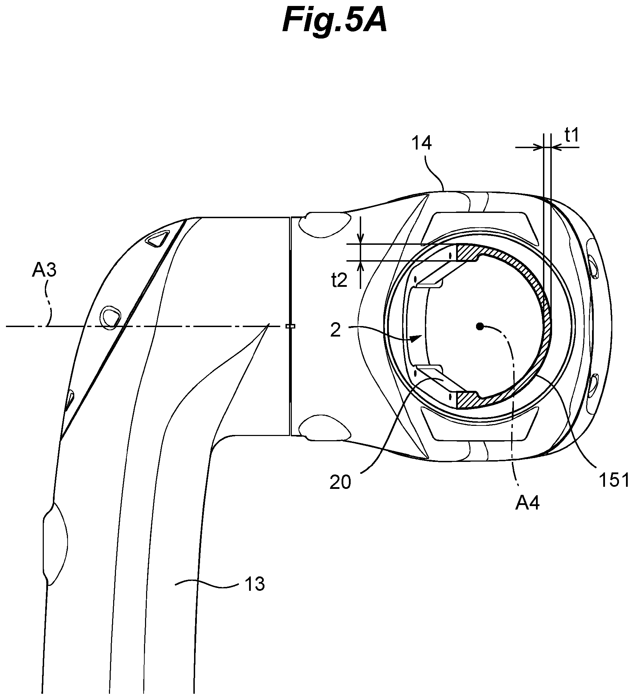

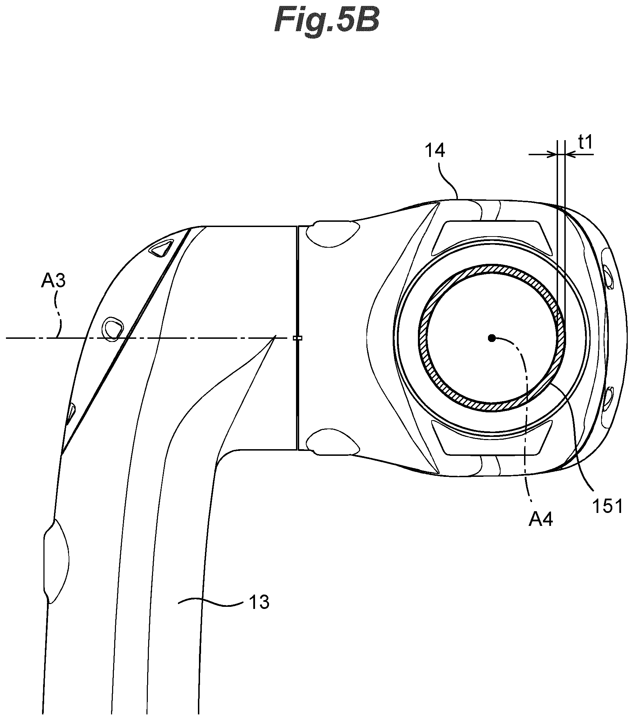

FIG. 5A and FIG. 5B are cross-sectional views showing cross sections orthogonal to the fourth axis A4 of the arm body 151 of the collaborative robot 1 according to the present embodiment. FIG. 5A is a cross-sectional view including the opening edge 20 of the opening 2, and FIG. 5B is a cross-sectional view not including the opening edge 20 of the opening 2. In the cross section orthogonal to the fourth axis A4, the thickness t1 of the opening edge 20 is larger than the thickness t2 of another portion. This allows the upper arm 15 (the arm body 151) including the opening edge 20 to have a sufficient flexural strength when the cover 152 is removed. Here, in the cross section orthogonal to the fourth axis A4, the thickness means a thickness in a radial direction centered at the fourth axis A4.

Although the embodiment of the present invention has been described in detail above, the present invention is not limited to the foregoing embodiment, and various design changes are possible in so far as they are within the spirit of the present invention in the scope of the claims.

### DESCRIPTION OF SYMBOLS

- 1: Collaborative robot
- 11: Base
- 12: Turning base
- 13: Lower arm
- 14: Shoulder
- 15: Upper arm
- 151: Arm body
- 152: Cover
- 16: Support arm
- 17: Distal end member
- 2: Opening
- 20: Opening edge
- 200: Opposing edge portion
- 3: Fixing member
- 41: Fourth axis motor
- 51: Fifth axis motor
- 511: Motor body
- 512: Output shaft
- 513: Side surface
- 514: End portion
- 53: Torque converter
- 510, 530: Protruding portion
- 531, 541: Insertion hole
- 54: Bracket
- A1 to A6: First axis to sixth axis
- S1: Gap

## Claims

1. A collaborative robot, comprising:
a turning base that is pivotally attached to a base so as to be rotatable about a first axis;
a lower arm that is pivotally attached to the turning base so as to be rotatable about a second axis;
a shoulder that is pivotally attached to the lower arm so as to be rotatable about a third axis that is parallel to the second axis;
an upper arm that is pivotally attached to the shoulder so as to be rotatable about a fourth axis along a longitudinal direction;
a support arm that is pivotally attached so as to be rotatable about a fifth axis perpendicular to the fourth axis at a distal end portion of the upper arm; and
a distal end member that is rotatable about a sixth axis along the longitudinal direction with respect to the support arm,
wherein
in a state where an output shaft of the fifth axis motor that allows the support arm to rotate about the fifth axis is disposed along the fourth axis, the fifth axis motor and a torque converter that converts a torque of the output shaft into a torque about the fifth axis are housed inside of the upper arm,
the upper arm is a cylindrical case, and includes an arm body having an opening for attaching the fifth axis motor and the torque converter, and a cover to be attached to the arm body to cover the opening, and
the fifth axis motor and the torque converter are housed in an internal region within an opening edge of the opening when viewed in a direction along the fifth axis.

2. The collaborative robot according to claim 1, wherein the fifth axis motor and the torque converter each have a protruding portion that protrudes from the opening edge of the opening.

3. The collaborative robot according to claim 1, wherein
the fifth axis motor includes a motor body,
when viewed in a direction along the fifth axis, a gap is formed between a pair of side surfaces of the motor body along a direction of the fourth axis and opposing edge portions of the opening edge that respectively face the side surfaces, and
the gap is formed to widen from an end portion of the side surfaces located nearer to the shoulder toward the torque converter along the fourth axis.

4. The collaborative robot according to claim 2, wherein
the torque converter is fixed to the arm body, and
the fifth axis motor is fixed in a suspended state to the torque converter via a bracket that houses the output shaft of the fifth axis motor.

5. The collaborative robot according to claim 4, wherein
the protruding portion of the torque converter is mounted to the bracket by a fixing member, and
an insertion hole into which the fixing member is to be inserted is formed in the protruding portion of the torque converter and the bracket in a direction along the fourth axis.

6. The collaborative robot according to claim 1, wherein in a cross section orthogonal to the fourth axis, a thickness of the opening edge of the opening is larger than a thickness of another portion of the opening.

7. The collaborative robot according to claim 1, wherein
the shoulder houses therein a fourth axis motor that allows the upper arm to rotate about the fourth axis, and
an area inside of the upper arm nearer to the shoulder than the fifth axis motor includes a hollow portion that houses a wire connected to the fifth axis motor.
